# EUROPEAN PATENT APPLICATION

(11) **EP 0 563 541 A1**
(43) Date of publication of application: **06.10.1993**
(21) Application number: 93101870.9
(22) Date of filing: 06.02.1993
(51) Int. Cl.: H04N 7/18

(54) **Portable magnifying reading apparatus with high convenience**

(30) Priority: 25.03.1992 JP 15685/92; 25.03.1992 JP 15686/92; 25.03.1992 JP 15687/92; 14.05.1992 JP 31764/92; 14.05.1992 JP 31765/92; 04.09.1992 JP 62391/92
(71) Applicant: TOKYO ELECTRONIC INDUSTRY CO., LTD., Hino City, Tokyo 191 (JP); HILKA (International) LTD., Tokyo 171 (JP)
(72) Inventor: Yamauchi, Hiroshi c/o Tokyo Electronic Ind. Co Ltd, Tokyo 191 (JP); Ichikawa, Isamu c/o Tokyo Electronic Ind. Co Ltd, Tokyo 191 (JP); Amemiya, Kazunari c/o Tokyo Electronic Ind Co Ltd, Tokyo 191 (JP); Hijikata, Hiroto c/o Tokyo Electronic Ind Co Ltd, Tokyo 191 (JP); Uchiyama, Mutuo c/o Hilka International LTD., Tokyo 171 (JP); Yoshida, Makoto c/o Hilka International LTD., Tokyo 171 (JP)
(74) Representative: Oppermann, Ewald, Dipl.-Ing.

(57) **Abstract**

There is provided a portable magnifying reading apparatus. A case (100) has an openable cover (102). A video camera (200) can be contained in the case. A video image obtained from the video camera is magnified and displayed on a color liquid crystal display device (300) provided within the case. Since the reading apparatus is portable, it has a battery container portion (106). The apparatus also has an external connection terminal (107) through which an external video signal is input and displayed.

## Description

The present invention relate to a portable magnifying reading apparatus with high convenience, which can be effectively used by visually handicapped persons.

There have been developed magnifying reading apparatuses for visually handicapped persons. Conventional apparatuses are of the type wherein an output from a video camera is amplified and displayed on a TV receiver and the video camera and the TV receiver are independent from each other. In most cases, such conventional apparatuses are used in the home individually.

According to the conventional apparatus, the video camera and the TV receiver are separate components. Since the size of the apparatus is large, the apparatus is not portable. In addition, it is not possible that display characters represented by video signals produced by a single video camera are used by two or more display devices.

There is a demand for a convenient magnifying reading apparatus which can be used in various modes and various situations. For example, there is a demand for an apparatus which can conveniently be used in a meeting, an outdoor place, a lecture, etc. Conventionally, a visually handicapped person views displayed characters with his/her face close to the screen, and it is desirable that visually handicapped persons have their own display devices.

An object of the invention is to provide a portable magnifying reading apparatus with high convenience, with which a number of persons can simultaneously view magnified characters of a single book.

Another object of the invention is to provide a portable magnifying reading apparatus with high convenience, wherein stable display and operation is achieved.

According to this invention, there is provided a portable magnifying reading apparatus comprising: a case having an openable cover; a video camera removably contained in the case and having a zoom function; a liquid crystal display (LCD) device contained in the case; a first connection terminal, provided on a wall of the case, for receiving a video signal from the video camera; a second connection terminal, provided on a wall of the case, for receiving an external video signal; and operation means, provided in an operation unit of the case, for selecting one of the video signal from the video camera via the first connection terminal and the external video signal via the second connection terminal, and supplying the selected signal to the LCD device.

In the above apparatus, a light-weight liquid crystal display device and a video camera are contained in the case. Thus, the apparatus can easily carried. A video signal is input from a similar apparatus via the second connection terminal. Even when there is only one book to be scanned, many persons can view the displayed characters with their own apparatuses, for example, in a meeting or school.

The apparatus of this invention is provided with means for freely varying the attitude of the LCD device. Thereby, the degree of freedom in angle, direction and attitude of the display is increased.

According to this invention, the case is provided with video camera connectors at two or more locations. Thereby, the area of movement of the video camera is increased, and the video camera can be moved in accordance with the position of an object to be scanned.

According to this invention, the LCD device can be removed from the inside of the case. Thereby, the area of movement of the LCD device is increased and convenience for the user is enhanced.

According to this invention, there is provided means for subjecting an image signal output from the video camera to binary-coding processing and inputting the binary-coded signal to an encoder. Thereby, the gray scale of the image signal is clearly divided to white and black levels, and the contrast on the display is clarified. Thus, magnified characters can be easily recognized.

According to this invention, there is provided a memory for storing image signal data cyclically and keeping data for a predetermined time period. Thereby, displayed characters are not shaken even if the camera is shaken, and stable, clear images can be obtained.

According to this invention, the video camera is provided with a guide mechanism using a roller which runs on an object to be scanned. Thereby, the camera can be stably moved over the object, and stable image pickup is achieved.

According to this invention, the video camera is provided with a writing device-related mechanism. Thereby, the user can easily add characters, marks, underlines, etc. to the object, while viewing the monitor displaying the object.

According to this invention, the video camera is provided with illumination means having luminance automatically controlled in accordance with the object. Thereby, it is possible to illuminate the object in an optimal condition and clarify the image displayed on the display device.

According to this invention, the video camera is provided with illumination means capable of changing the color of illumination light. Thereby, the color of illumination light is selected in accordance with the color of the object, and clear image is displayed.

This invention can be more fully understood from the following detailed description when taken in conjunction with the accompanying drawings, in which:
Fig. 1A and Fig. 1B are perspective views showing an external structure of a magnifying reading apparatus according to an embodiment of the present invention;
Fig. 2A and Fig. 2B are a plan view and a side view of the embodiment;
Fig. 3 shows an example of a video camera used in the apparatus of the embodiment;
Fig. 4 shows an example of an electric system of the apparatus of the embodiment;
Fig. 5 shows a magnifying reading apparatus according to another embodiment of the invention;
Figs. 6A to 6C are views for illustrating the rotational operation of a display panel of a liquid crystal device shown in Fig. 5;
Figs. 7A to 7D are views for illustrating the rotational operation of the display panel of the liquid crystal device shown in Fig. 5;
Fig. 8 is a magnifying reading apparatus according to another embodiment of the invention;
Fig. 9 is a view for describing the use of the apparatus shown in Fig. 8;
Fig. 10 is a circuit diagram showing a structure of a signal processing circuit of the apparatus according to the invention;
Fig. 11 is a circuit diagram showing another structure of the signal processing circuit of the apparatus according to the invention;
Figs. 12A and 12B show another structure of the signal processing circuit of the apparatus according to the invention and an example of a display image produced by use of this processing circuit;
Figs. 13A and 13B are views for describing the structure of a power supply system of the apparatus of the invention;
Figs. 14A to 14C are views for describing a structure of the video camera used in the apparatus of the invention;
Figs. 15A to 15C are views for describing another structure of the video camera used in the apparatus of the invention;
Figs. 16A and 16B are views for describing still another structure of the video camera used in the apparatus of the invention;
Fig. 17 shows an example of an automatic illumination adjusting circuit provided within the video camera used in the apparatus of the invention;
Fig. 18 is a view for describing still another structure of the video camera used in the apparatus of the invention; and
Fig. 19A and Fig. 19B show still another structure of the video camera used in the apparatus of the invention, and an electric circuit portion thereof.

Embodiments of the present invention will now be described with reference to the accompanying drawings.

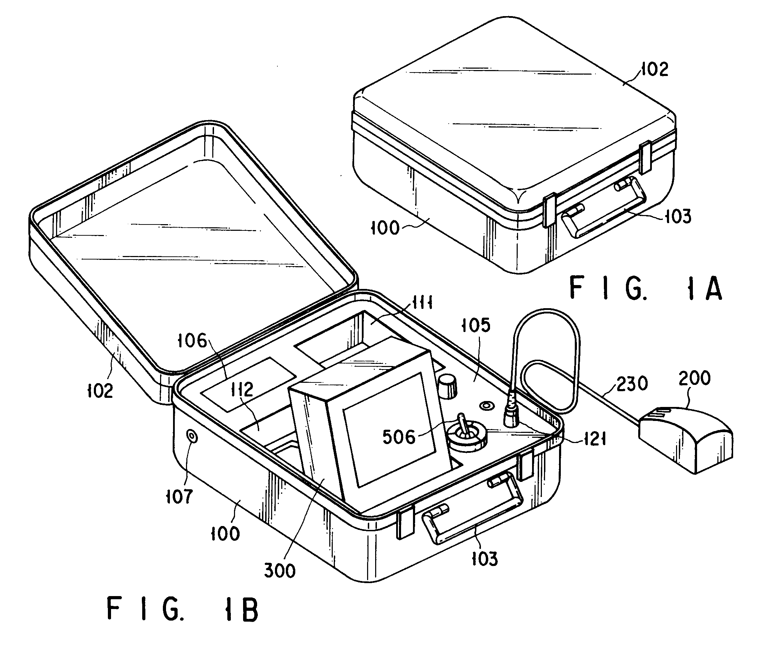

Fig. 1A and Fig. 1B are perspective views showing an external structure of a magnifying reading apparatus according to an embodiment of the present invention. The apparatus has a case-like external appearance. A cover 102 is rotatably attached to one side of a case body 100. The case body 100 can easily be carried by a user, with the cover 102 closed and a handle 103 held by the user. The apparatus has a plane size (i.e. two-dimensional size) of about "B5" or "A4". Container portions 111 and 112 are formed in the body 100. The container portion 111 can receive a video camera 200, and the container portion 112 can receive a color liquid crystal display (LCD) device 300. The video camera 200 is connected via a cord 230 to a connector 121 provided on an operation panel 105 of the body 100. The video camera 200 is taken out of the container portion 111 and directed freely to an object in a range defined by the length of the cord 230. The video camera 200 is provided with a zoom function and a dial for adjusting a magnification factor.

The cord 230 may be detachably connected to the operation panel 105 via a connector or may be fixedly connected to the panel 105. In Fig. 1B, the cord 230 is connected to a right portion of the body 100, but it may be connected to a left portion thereof. In addition, the cord 230 may be connected to one or several locations on the body 100, in consideration of convenience for the user.

The zoom function of the video camera 200 may employ various control methods: e.g. optical lens control method, electronic control method based on data read/write from/in a memory, etc. Either a video signal supplied from the video camera 200 or an external video signal supplied from an external connection terminal is selected by a switch 506 formed on the operation panel 105 and the selected signal is delivered to the color LCD device 300, as will be described later.

The color LCD device 300 can be completely contained in the container portion 112, and the cover 102 of the body 100 can be closed. The display surface of the display device 300 can be inclined and directed to the user, as shown in Fig. 1B, at the time of use. The operation panel 105 is also provided with a dial for adjusting the luminance of the color LCD device 300.

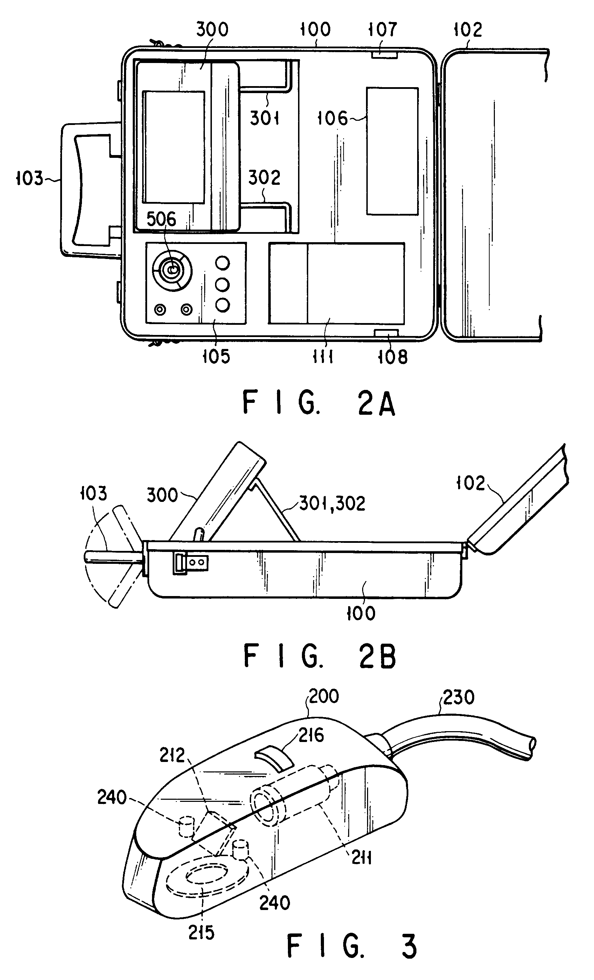

Fig. 2 shows a mechanism for raising and flattening the color LCD device 300. Since the display device 300 has a flat plate shape, a one-side edge (i.e. the lower-side edge of the display screen) is rotatably attached to the body 100. The other-side edge is supported by support rods 301 and 302. The support rods 301 and 302 are rotatably fixed at one end to the bottom of the container portion 112, and are engageable at the other end with the rear plate of the display device 300. Accordingly, when the support rods 301 and 302 are flattened and contained in the container portion 112, the color LCD device 300 is also rotated down into the container portion 112. In this case, a locking mechanism may be provided for supporting the display device 300 since the reading apparatus is designed as a portable one.

In addition, the reading apparatus is provided with a battery container portion 106 for portable use. The apparatus is also provided with terminals 107 and 108 for receiving and supplying image signals from and to an external similar apparatus(es). The use of these will be described later.

Fig. 3 shows an example of the video camera 200. The camera 200 has a palm-sized case and comprises a camera 211, an optical system 212 situated in front of the camera 211, and illumination devices 240 including, e.g. light-emitting devices. A hole 215 is formed in the lower part of the case, so as to correspond to the optical system 212. A zoom switch 216 is provided on the upper part of the case.

The video camera 200 is used such that it is scanned over lines of a page of a book to be read. A location corresponding to the hole 215 is illuminated, and an image in the hole 215 is input to the camera 211 via the optical system 212. The camera 211 delivers a video signal to a video processing circuit in the camera case 201 via a cord, and the video signal is processed in the video processing circuit. The processed video signal is displayed on the color LCD device 300. The user can view enlarged characters scanned by the camera 211 and displayed on the display device 300.

Various types of video cameras 200 may be used. The video camera 200 may be provided with a dial for adjusting the intensity of illumination. In addition, the video camera 200 may be provided with adjusting dials which are normally provided on the color LCD device 300, so that all operations may be controlled by one hand. Furthermore, regarding the relationship between the video camera 200 and the signal processing device, it is possible to provide memory means for storing, e.g. characters of several lines. Thereby, the user's scanning operation is simplified, and the user need not successively move the camera body in units of one to five characters.

The electric operation of the above apparatus will now be described.

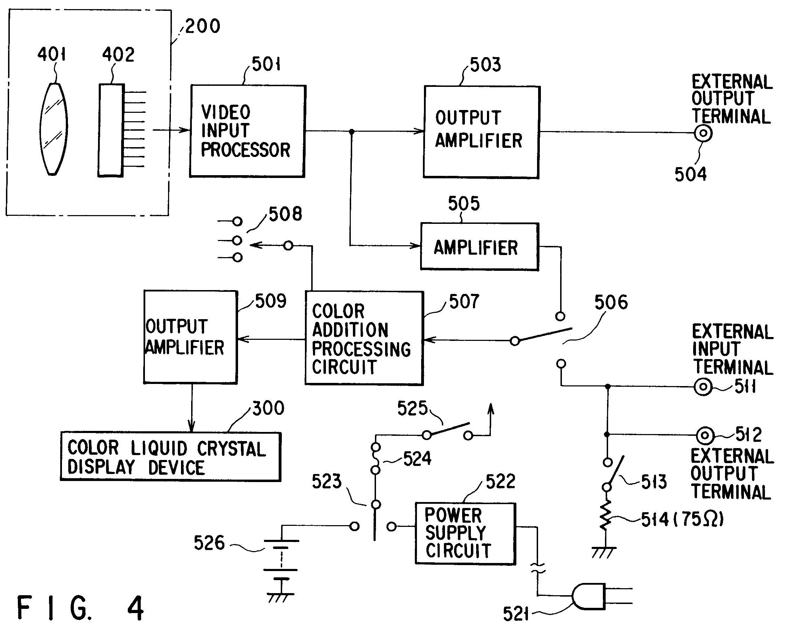

In Fig. 4, numeral 401 denotes a zoom lens. An optical image enlarged by the zoom lens 401 is focused on an image focusing surface of a CCD solid pickup element 402. An image signal output from the pickup element 402 is converted to a video signal in a video signal processor 501. An output signal from the video signal processor 501 is delivered to an external output terminal 504 via an output amplifier 503 and simultaneously to one of the terminals of a switch 506 via an amplifier 505. The switch 506 selects either an external input signal from an external input terminal 511 or an output signal from the amplifier 505. The selected signal is supplied to a color addition processing circuit 507. In the circuit 507, for example, a single-color signal (e.g. red, yellow) is added to a character signal included in the video signal. The video signal including the color signal is output from the color addition processing circuit 507 to the color LCD device 300 via an output amplifier 509, and the video signal is displayed such that only characters, for example, are colored.

According to this apparatus system, when the switch 506 selects the signal from the external input terminal 511, an external output video signal is input to the system from another similar portable liquid crystal magnifying reading apparatus and the contents of a text read by another person can be displayed on the color LCD device 300. Further, the video signal input from the external input terminal 511 can be delivered via an external output terminal 512 to another similar reading apparatus as external input video signal. Thus, while a person is reading a book with the aid of the magnifying reading apparatus, other persons can read the same book with similar reading apparatuses via the external input terminal 511 and output terminal 512.

The color signal to be added to the character signal in the color addition processing circuit 507 can be changed by a switch 508. The color, which can perceived by the user most easily, is selected. The switch 508 may be freely operated by the user, or may be preset by the manufacturer when the user is known beforehand. A color to be easily recognized by a visually handicapped person is, in some cases, limited and, in this case, that color is added to characters. A color signal is added to a character signal, for example, in the following manner. Suppose that a book is now being scanned. A monochromatic luminance signal having a pre-determined level or above (or below) may be determined to be a character signal. Accordingly, the luminance signal is input to a slicing circuit, and a signal (character signal) having a predetermined level or above is derived. A carrier color signal is superimposed on the luminance signal with a timing corresponding to character signals, thereby enabling the display device to display colored characters. The derived character signal is used as a switch control signal, and the carrier color signal is superimposed on the luminance signal via the switch.

A power source system of the above-described apparatus will now be described. A commercial electric power supplied from a plug 521 is rectified and smoothed by a power supply circuit 522. The smoothed power is supplied to the respective circuits through a switch 523, a fuse 524 and a power supply switch 525. Since the reading apparatus is portable, a battery 526 may be mounted for convenient use. When the battery 526 is used, the switch 523 is connected to the battery side. A resistor 514 connected to a switch 513 is used for matching, when the external output is not required.

The above-described reading apparatus has various features. The battery 526 can be used since the reading apparatus is portable. The color LCD device 300 is used for reducing the weight of the apparatus. Since color display is achieved, characters can be displayed with color which can be most easily recognized by a visually handicapped person. Further, two or more magnifying reading apparatuses can be connected to the present apparatus, so that one book can be read by many persons simultaneously. For example, when there is a teacher and many students, signals can be supplied from the teacher's reading apparatus to the students' apparatuses. In a meeting, too, a document owned by a leader can be transmitted to many persons via the external output terminal.

In addition, this reading apparatus system is applicable to various uses. For example, a document is placed on the cover 102 shown in Fig. 1B and scanned by the video camera 200, a clipping mechanism may be provided to fix the document, or a guide mechanism for the video camera 200 may be provided.

As has been described above, the present invention can provide a convenient magnifying reading apparatus with which a book can be simultaneously read by many persons.

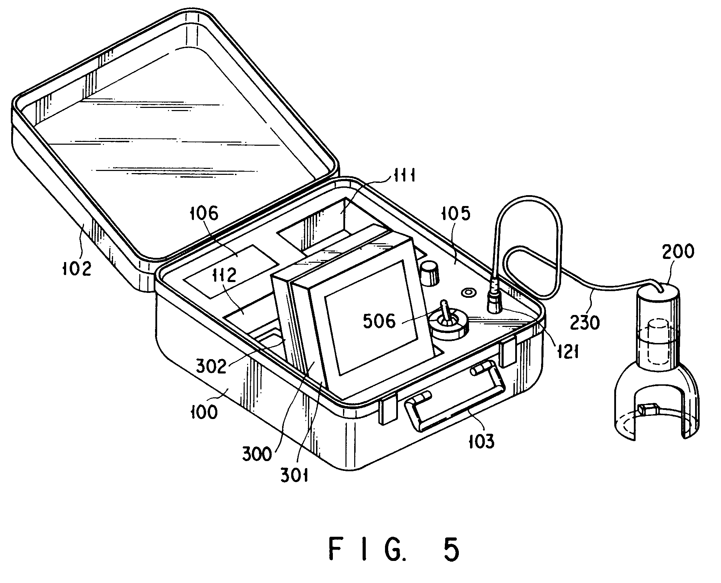

Fig. 5 shows another embodiment of the invention, wherein a supporting mechanism for supporting the color LCD device 300 differs from that of the preceding embodiment. The supporting mechanism will now be described in detail.

The color LCD device 300 can be completely contained in the container portion 112 and the cover of the case body can be closed. When the color LCD device 300 is used, the display screen can be directed to the user, for example, by means of a hinge mechanism, as shown in Fig. 5. The operation panel 105 is provided with a dial for adjusting the luminance of the color LCD device 300.

The color LCD device 300 comprises a rectangular display panel 301, a panel holder 302 for holding the display panel 301, and engaging means for engaging the display panel 301 with the panel holder 302 such that the display panel 301 is movable on the holder 302 in both longitudinal and transverse directions. The display face of the display panel 301 has an aspect ratio of, e.g. 3 : 4. In the normal horizontal position, the display face is suitable for displaying horizontally arranged characters. The display face, however, can be rotated 90° in the vertical position so that it can effectively display vertically arranged characters.

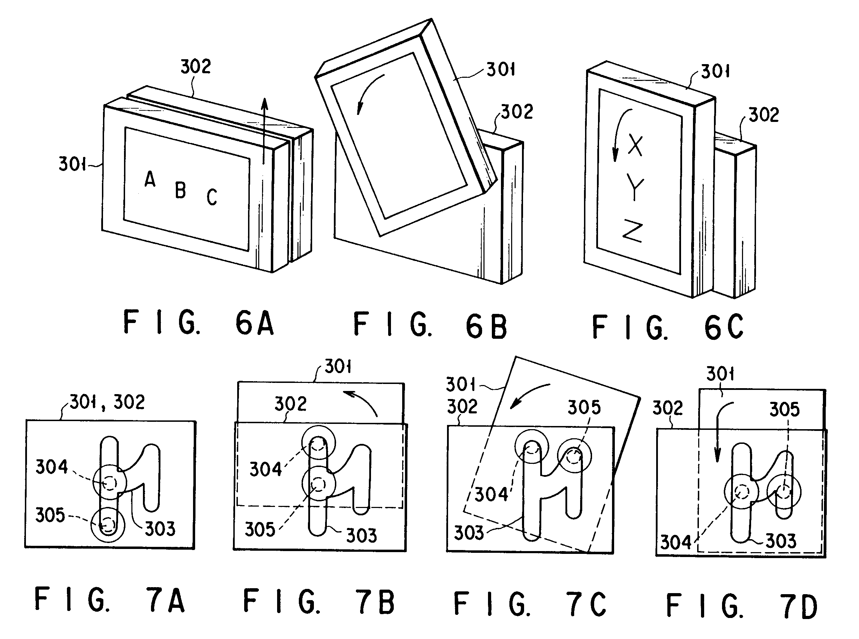

Figs. 6 and 7 are views for illustrating the mechanism for changing the attitude of the display panel 301 of the color LCD device 300. Figs. 6A to 6C show the process of changing the attitude of the display panel 301, as viewed from the front side. Figs. 7A to 7D show the process of changing the attitude of the display panel 301, as viewed from the rear side. The attitude of Fig. 6A is suitable for reading of horizontally arranged characters. To change the attitude of Fig. 6A to one suitable for reading of vertically arranged characters, the display panel 301 is slid upward (Figs. 6A and 7B), rotated 90° (Figs. 6B and 7C), and moved downward (Figs. 6C and 7D). The vertical attitude is restored to the original horizontal attitude by the steps of reverse order. The panel holder 302 is provided with a slit 303 in which pins 304 and 305 of the display panel 301 are inserted.

When horizontally arranged characters are scanned, the longitudinal axis of the image pickup face of the camera is situated horizontal. When vertically arranged characters are scanned, the longitudinal axis of the image pickup face of the camera is situated vertical. Thereby, an effective image with a maximum number of characters can be obtained.

The structure of the video camera 200 shown in Fig. 5, which differs from that of the video camera 200 shown in Figs. 1 and 2, will be described later.

In the above embodiment, the color LCD device 300 is arranged within the case body 100. However, if the color LCD device 300 can be situated apart from the case body 100, the convenience for the user increases.

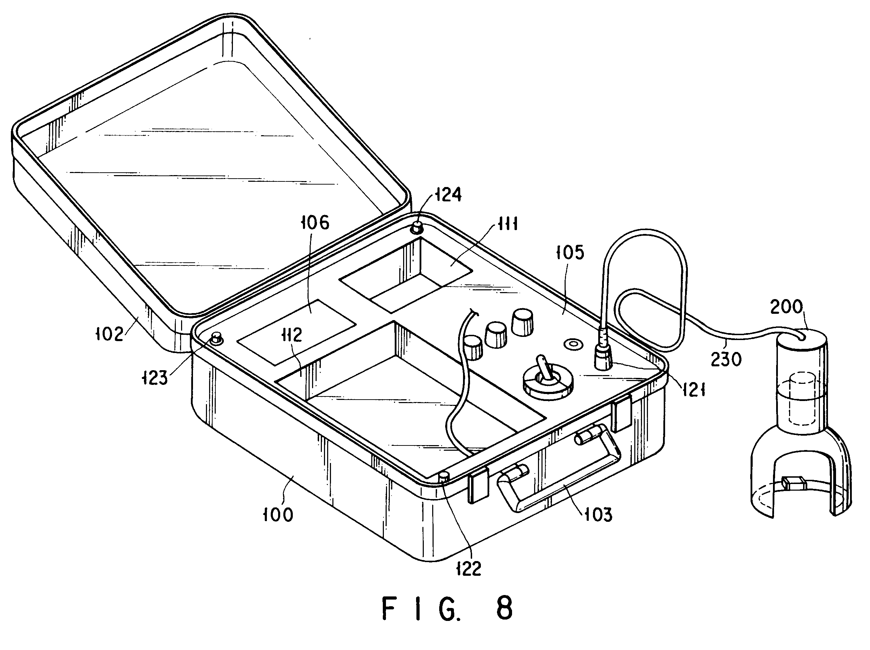

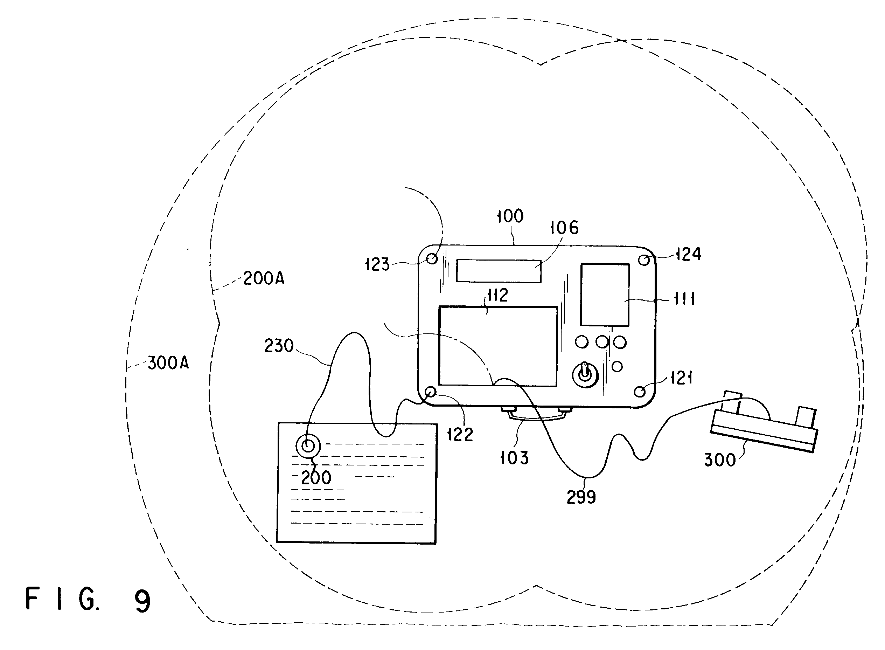

Fig. 8 shows still another embodiment. In this embodiment, corner portions of the upper face of the case body 100 are provided with connectors 121, 122, 123 and 124 for connection with the video camera. The color LCD device 300 can be removed from the container portion 112 and located at a position apart from the case body 100 by a distance corresponding to the length of a cable 299. With this structure, as shown in Fig. 9, a location area 200A of the video camera 200 and a location area 300A of the color LCD device 300 are enlarged. The user can freely decide the location for use of the video camera 200 and color LCD device 300, and the convenience for the user is enhanced. In this embodiment, both location areas of the color LCD device 300 and video camera 200 are enlarged, but only one of the location areas may be enlarged.

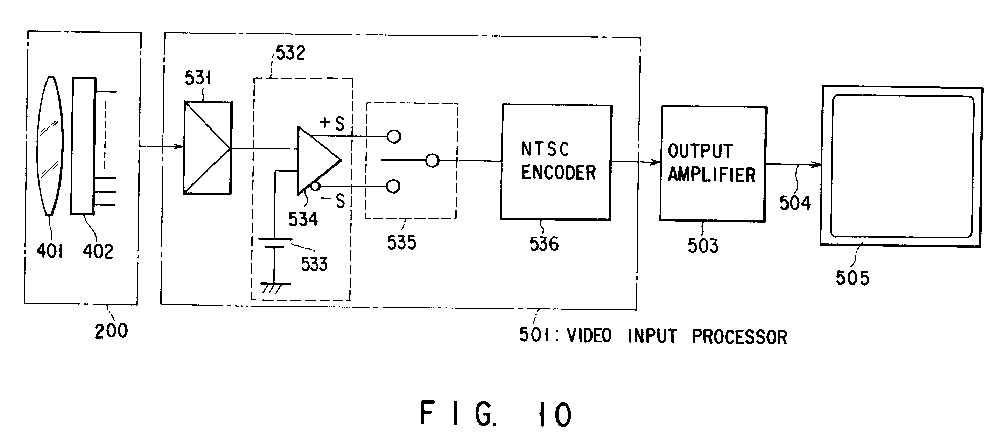

Fig. 10 shows a characteristic portion of the above-described electric signal processing system.

In a system using a regular solid image pickup device, a monochromatic image of 8 gray scales is input and a magnified image is output to a display device.

However, in the above-described magnifying reading apparatus, in some cases, the solid image pickup device cannot obtain clear black character images of 8 gray scales because of insufficient luminance of characters or color characters, and a visually handicapped person has difficulty in reading. In addition, depending on the intensity of illumination, clear black character images may not be obtained. Further, owing to roughness on the page of a book, correct focusing of the image pickup device cannot be achieved, and clear black character images cannot be obtained.

Under the circumstances, according to the present apparatus system, in the image input unit, clear contrast (light/dark) is obtained and character image signals are converted to binary signals for easy reading. The image input unit comprises a solid image pickup device, means for comparing an image pickup signal obtained by the solid image pickup device with a predetermined reference level, thereby obtaining a binary image pickup signal, and an encoder for encoding the binary image pickup signal obtained by this means and producing a video signal. Since the image pickup signal is obtained as a binary ("black" or "white") signal, the displayed character images have a very clear contrast and are easy to read.

Referring to Fig. 10, an image pickup signal obtained by a solid pickup element 402 is amplified by an amplifier 531 and input to a binary-coding circuit 532. The binary-coding circuit 532 includes a comparator circuit 534 for comparing an input image pickup signal with a reference voltage 533 and producing a positive signal (+)S and a negative signal (-)S. A switch 535 selects either the positive signal or negative signal and supplies it to an NTSC encoder 536. The encoded video signal is delivered to the external output terminal 504 via the output amplifier 503 and supplied to the LCD device 505.

When the switch 535 selects the positive signal (+)S, a white-level signal component of the image pickup signal obtained by the solid pickup element 402, which has a sufficient luminance, is derived. Thus, when a book, etc. is scanned, a magnified image with clear contrast (character = black; background = white) can be viewed. Even when color characters (e.g. green or red) appear on the book, white and black (= character) images are displayed since the image pickup signals are subjected to binary coding processing. In addition, when correct focusing of the pickup element is not achieved owing to roughness on the page of the book, unclear images are formed in the prior art. However, according to the invention, clear black-level character images are obtained. If the switch 535 is changed over to the signal (-)S side, white character images and black background images are obtained.

In the above embodiment, the monochromatic display is used. However, a color display may be used. In this case, a color generator is provided at an output unit of the encoder, and when a black-level signal, for example, is input, a color signal (red or green) is produced.

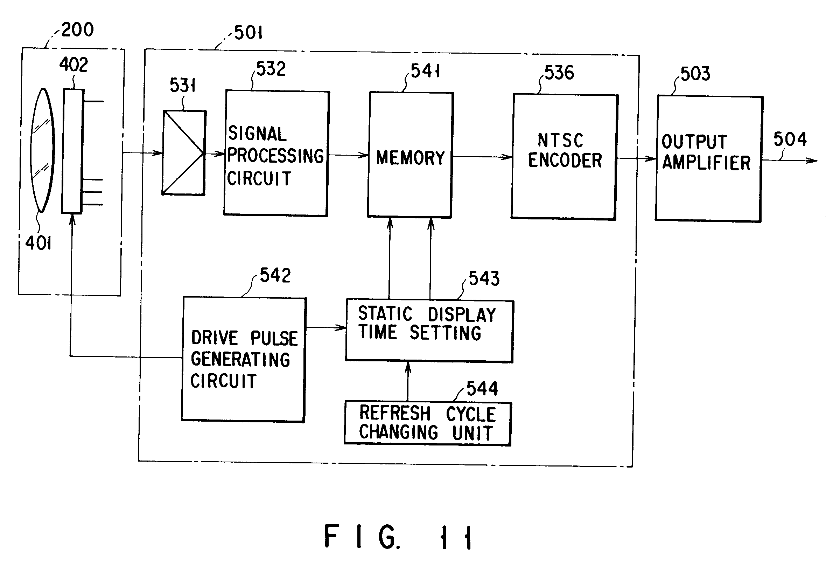

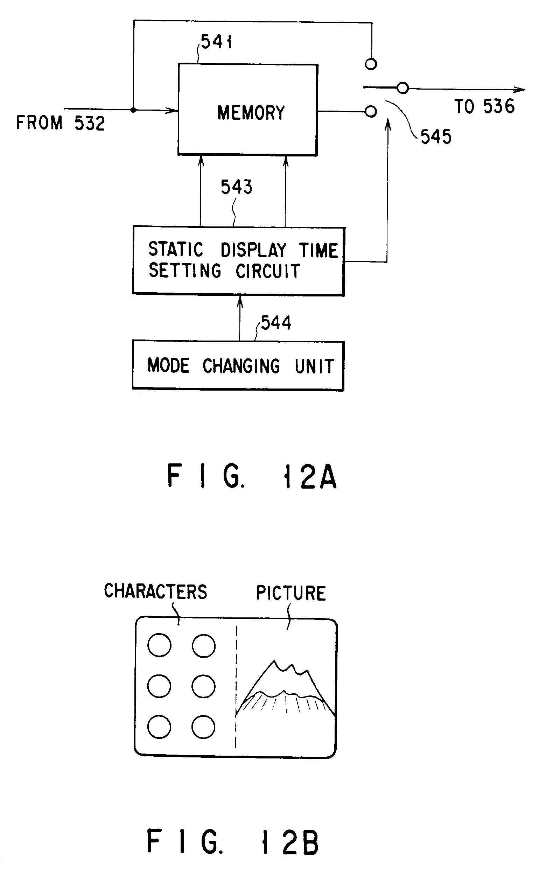

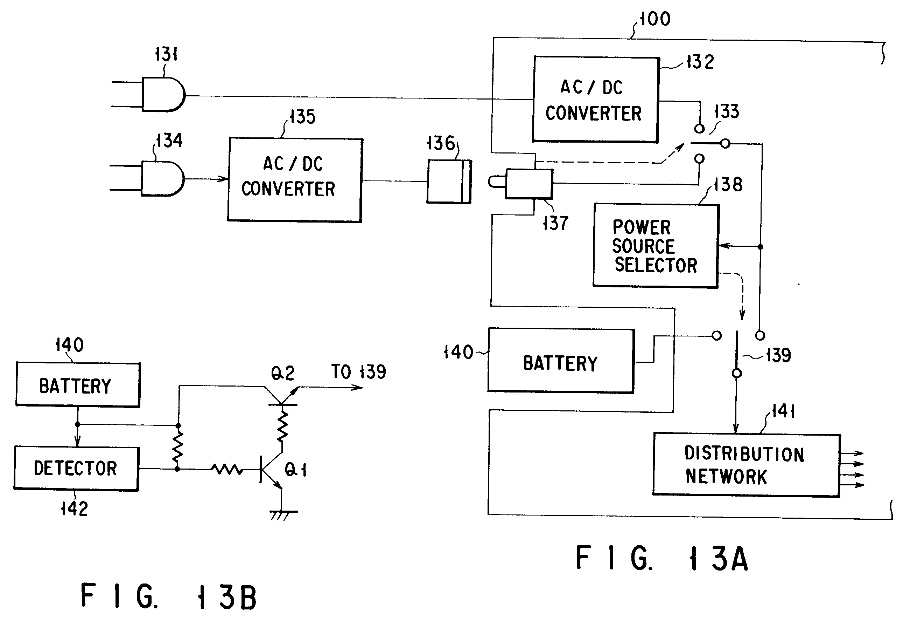

Fig. 11 further shows the characteristic portion of the electric signal processing system.

When a magnifying reading apparatus is used, the user holds a small-sized camera using a solid pickup element (CCD element) by one hand, and slides it over lines of a book, etc., and a magnified image is displayed on a display unit. Since the camera is slid over the sheet surface of the book, etc., the camera is slightly shaken. As a result, a magnified image is greatly shaken and the user has difficulty in reading.

According to this embodiment, the displayed image is temporarily made static, for easier reading of magnified characters. For this purposed, the apparatus comprises a solid pickup element for converting an optical image of an object to an electric signal, storing means for storing an image pickup signal corresponding to one field of the solid pickup element, read-out means for repetitively reading out the signal stored in the storing means, and switching means for changing the cycle of the storing operation of the storing means by remote control. Thereby, the static display time for statically displaying the magnified image is set by the changed cycle of the storing operation of the storing means. In accordance with the reading speed, the static display time can be set. In the static display state, the screen is not shaken irrespective of shaking of the camera, and the user can easily read the displayed characters.

In Fig. 11, an optical image of the object is focused on the pickup face of the solid pickup element 402 via the optical system 401. The solid pickup element 402 receives a drive pulse from a drive pulse generating circuit 542 to read out the photoelectrically converted charge by vertical cycle field shift, horizontal cycle horizontal transfer. The optical image is output from the solid pickup element 402 as a photoelectrically converted image signal and then amplified by the amplifier 531. The amplified signal is input to the signal processing circuit 532. The signal processing circuit 532 is, for example, a binary coding circuit. The amplified signal is subjected to binary coding processing, and the processed signal is output to a field (or memory) memory 541. The storing time of the memory 541 is controlled by a refresh timing pulse from a static display time setting circuit 543 (described later). A signal corresponding to, e.g., one field is repetitively read out from the memory 541 at a field cycle and delivered to the NTSC encoder 536. The encoded NTSC signal produced by the NTSC encoder 536 is output to the output terminal 504 via the output amplifier 503.

The static display time setting circuit 543 can set the write operation timing of the memory 541 to, e.g. one per 5 seconds, one per 10 seconds, one per 15 seconds, or one per 20 seconds. On the other hand, the solid pickup element 402 performs the image pickup operation at the cycle of 1/60 second. The refresh cycle of the memory 541 can be changed by the user by operating a refresh cycle changing unit 544.

Accordingly, the user can set the speed of so-called "still image feeding" in accordance with the user's reading speed. While the static image is displayed, displayed characters are not shaken even when the camera is shaken.

In the above embodiment, the memory 541 is provided midway in the image signal line, and the storing time of the memory 541 is set. However, it is possible to connect a charge storing portion to the solid pickup element 402 and set the storing time of the charge storing portion. In this case, however, it is necessary to provide the storing portion with a signal charge return loop.

In the above embodiment, the signal charge corresponding to one field is read out from the solid pickup element 402 at a normal cycle of 1/60 second. However, the solid pickup element may be provided with a so-called shutter function. Specifically, when an image of a fast-moving object is picked up, the shutter function is performed to select 1/500 second, 1/1000 second, etc., and the read-out signal is stored in the memory 541 for repetitive display.

Fig. 12 shows still another embodiment of the invention. By providing the memory 541, as shown in Fig. 11, a multi-screen can be obtained. For example, a picture portion on a page of a book is stored in the memory 541 and displayed on a half screen, while characters are displayed on the other half screen (see Fig. 12B). For this purpose, as shown in Fig. 12A, data on the picture portion is stored in the memory 541 as static image data, and thereafter normal scanning is performed. A half screen static mode is designated by a mode changing unit 544. Thereby, an output from the memory 541 and an output from the signal processing circuit 532 are alternately selected by a switch 545 for every half-screen period. Specifically, these two outputs are alternately changed at every 1/2 horizontal cycle. By this function, the user can read characters while viewing the picture on the screen.

Fig. 13A shows an embodiment of a power supply system used in a magnifying reading apparatus. Since the magnifying reading apparatus is portable, it is required that a commercial power supply be available, an adaptor be available since commercial power voltage varies according to area, and a battery be available when commercial power supply cannot be used. Since two or more supply sources are available, a power source selecting function is required.

In Fig. 13A, a plug 131 is connected to a commercial power supply. The plug 131 is connected via a cord to an internal AC/DC converter 132 provided within the apparatus body 100. An output from the internal AC/DC converter 132 is a DC voltage suitable for internal circuits of the magnifying reading apparatus and the output is supplied to one input terminal of a switch 133. A plug 134 is provided on an external AC/DC converter 135. An output from the external AC/DC converter 135 is supplied to a connector 136. The connector 136 can be coupled to a connector 137 provided on the apparatus body 100. An output from the connector 137 is supplied to the other input terminal of the switch 133.

The switch 133 is designed to select the output from the connector 137 by a mechanical change-over member, when the connector 136 is connected to the connector 137. When the connectors 136 and 137 are not used, the switch 133 is designed to automatically select the output from the internal AC/DC converter 132. An output from the switch 133 is supplied to a power source selector and one of the input terminals of a switch 139. The input terminal of the switch 139 is supplied with an output of a battery 140 mounted in the apparatus body 100.

The switch 139 is designed to automatically select the output of the battery 140 in the normal state. However, when the power source selector 138 responds to the output voltage from the switch 133, the switch 139 is operated to select the output of the switch 133 by an output control signal of the power selector 138. In other words, the power from the plug 131 or 134 is preferentially used. The output from the switch 139 is supplied to a distribution network 141 and supplied to internal circuits as power supply voltage.

Fig. 13B shows an embodiment wherein there is provided a voltage detector 142 for monitoring voltage of the battery 140. The output from the battery 140 is supplied to the switch 139 via a transistor Q2. The output of the battery 130 is supplied to the voltage detector 142. The output voltage of the battery 140 decreases to a predetermined value or below, the voltage detector 142 turns a transistor Q1 off. When the transistor Q1 is turned off, the transistor Q2 is also turned off.

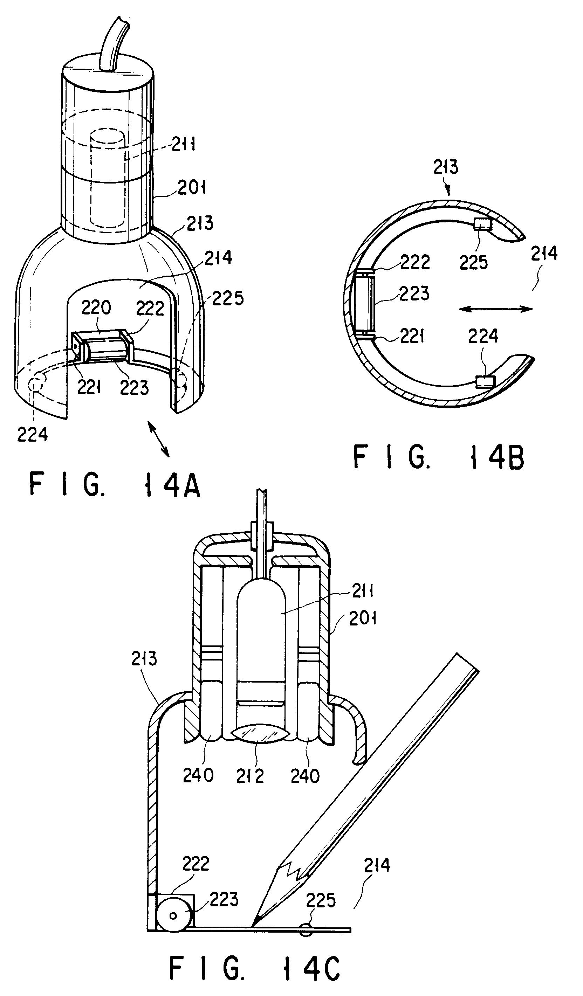

Fig. 14 shows an example of the video camera 200.

The video camera 200 is used in contact with a book and scans characters on pages of the book. When the user moves the video camera 200 along lines of characters, however, the movement of the camera 200 is not stable. If the user fails to pay attention to the camera 200, the course of movement of the camera 200 may be diverted. Since the characters are magnified on the display, the diversion of the course of the camera 200 results in considerable shaking of characters on the screen.

According to this system, when the video camera is moved along lines of characters on a page with its tip portion in contact with the page, the course of movement of the camera is stabilized and the operability is enhanced.

For this purpose, a columnar rubber roller is rotatably provided at a pickup-side edge portion of the camera case. The camera case holds an image pickup camera and a magnifying lens situated in an optical path of the camera. The axis of the rubber roller is perpendicular to the direction in which the roller is moved.

By this structure, stable movement means for the video camera is obtained. Since the rubber roller has a directivity with respect to the surface of the page, the movement of the video camera is stabilized and characters are easily read.

In Fig. 14, the video camera 200 comprises a camera 211 in a small-sized camera case 201, an optical system 212 constituted by a magnifying lens situated in front of the camera 211, and illumination devices 240. A lower part of the case is provided with an axially extending hood 213. The hood 213 is part of the case and situated at the optical system 212. The hood 213 has a flared shape, and a side portion thereof is provided with an opening 214 through which writing means such as a pencil is inserted. Thus, it is possible to display the state in which characters are written by the user with writing means. A zoom switch (not shown) is provided on an upper part of the case.

At the tip portion of the hood 213 (i.e. tip portion of the case), a notch 220 is formed to face the opening 214. A rubber roller 223 is rotatably provided between bent-up portions 221 and 222 formed at the notch 220. The axis of the rubber roller 223 is perpendicular to the direction in which the camera is moved. When the tip portion of the video camera 200 is placed on the surface of the page, the rubber roller 223 is also put in contact with the surface of the page. Accordingly, when the video camera 200 is slid in a direction of the arrow, the direction of sliding movement is determined by the rotational movement of the rubber roller 223. Thus, the camera is not shaken laterally and is stably moved along lines of characters. In addition, sliding members 224 and 225 with less frictional resistance are provided at both ends in the direction perpendicular to the direction of movement of the camera.

When the video camera 200 is used for reading, it is slid over lines on a page of a desired book. Then, a location below the hood 213 is illuminated, and an image of the illuminated location is picked up by the optical system 212 and delivered to the camera 211. An image pickup video signal from the camera 211 is processed by the video processing circuit built in the case body 100 and the processed signal is displayed on the color LCD device 300. The user can view the magnified characters scanned by the camera 211 on the color LCD device 300. Further, when additional lines or characters are written between the lines on a page by the user, the writing means such as a pencil is inserted from the opening 214 and the user can view the state in which such lines or characters are written. The hood 213 is rotatable relative to the camera case 201, and the direction of insertion of the writing means is freely set when it becomes necessary to change the attitudes of the display panel ("vertical" or "horizontal") and the camera. In addition, the camera is easily handled by either a right-handed person or a left-handed person.

Various modifications may be made to the video camera 200. The video camera 200 may be provided with a dial for adjusting the intensity of illumination or a dial for adjustment (in luminance or color) of the color LCD device 300. In this case, all operations can be made by one hand. Furthermore, regarding the relationship between the video camera 200 and the signal processing device, it is possible to provide memory means for storing, e.g. characters of several lines. Thereby, the user's scanning operation is simplified, and the user need not successively move the camera body in units of one to five characters.

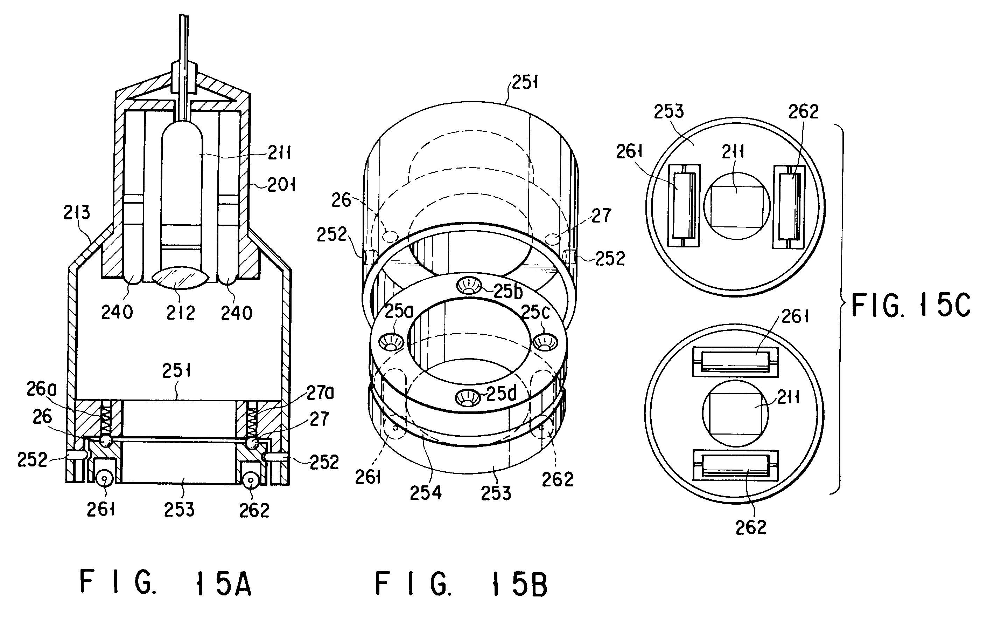

Fig. 15 shows another embodiment of the video camera. The video camera 200 is provided with stable movement means, as described above. In this embodiment, however, even if the direction of movement of the video camera 200 is changed 90°, stable movement is ensured. In Fig. 15, the parts common to those in Fig. 14 are denoted by like reference numerals.

The video camera 200 comprises a camera 211 in a small-sized camera case 201, an optical system 212 constituted by a magnifying lens situated in front of the camera 211, and illumination devices 240. A lower part of the case is provided with an axially extending hood 213. The hood 213 is part of the case and situated at the optical system 212. The hood 213 has a flared shape, and a side portion thereof is provided with an opening 214 (not shown) through which writing means such as a pencil is inserted. Thus, it is possible to display the state in which characters are written by the user with writing means. A fixed ring 251 is attached by screws 252 to the inner peripheral surface of the tip portion of the hood 213 (i.e. tip portion of the case). A rotatable ring 253 is provided under the fixed ring 251. An annular groove 254 (see Fig. 15B) is formed on that part of the outer periphery of the rotatable ring 253, which corresponds to the screws 252. Tip portions of the screws 252 are engaged in the annular groove 254. Thereby, the rotatable ring 253 is rotatable relative to the fixed ring 251, but is made axially immovable by the engagement between the screws 252 and groove 254.

Recesses 25a, 25b, 25c and 25d, which constitute a click mechanism, are formed in the upper surface of the rotatable ring 253, for example, at angular intervals of 90°. On the other hand, balls 26 and 27 are arranged on that surface of the fixed ring 251 which is opposed to the rotatable ring 253, for example, at angular intervals of 180°. The balls 26 and 27 are situated in through-holes extending in the thickness direction (axial direction) of the fixed ring 251, and the balls 26 and 27 are urged downwards by springs 26a and 27a. Thus, when the fixed ring 251 and rotatable ring 253 are assembled, the balls 26 and 27 are engaged in the recesses 25a and 25c or the recesses 25b and 25d, thereby positioning the rotatable ring 253.

For example, two rollers 261 and 262 are attached on the lower surface of the rotatable ring 253 in parallel to each other. The rollers 261 and 262 have columnar shapes and are rotatable. When the video camera 200 is slid in a direction perpendicular to the axes of the rollers 261 and 262, the rollers 261 and 262 rotate and determine the direction of movement of the video camera 200. The direction of rotation of the rollers 261 and 262 can be made to coincide with the horizontal direction of the image pickup face of the camera 211, as shown in the upper part of Fig. 15C, or can be made to coincide with the vertical direction of the image pickup face. This is achieved by rotating the rotatable ring 253. For example, when the video camera 200 is moved in the horizontal direction to magnify and read the surface of a document, the direction of the rollers 261 and 262 is set, as shown in the upper part of Fig. 15C. When the video camera 200 is moved in the vertical direction, the direction of the rollers 261 and 262 is set, as shown in the lower part of Fig. 15C. Thereby, the operability of the video camera 200 is enhanced.

Referring to Fig. 14, another function of the video camera 200 will now be described. The user may add underlines or memorandum to a book, while reading the book.

According to this system, memorandum, addition or correction can be made between lines of a page of a book while the magnified characters scanned by the video camera 200 are displayed on the display device.

For this purpose, the flare-shaped hood is attached to an image-pickup side part of the case which holds the camera and the magnifying lens situated in the optical path of the camera. A side portion of the hood is provided with the opening 214 through which the writing means can be easily inserted. Thereby, the writing means can be inserted through the opening and characters can be written on the page on which the hood is placed. An image showing the state in which characters are being written can be magnified and viewed. Needless to say, the video camera shown in Fig. 15 may be provided with the opening 214.

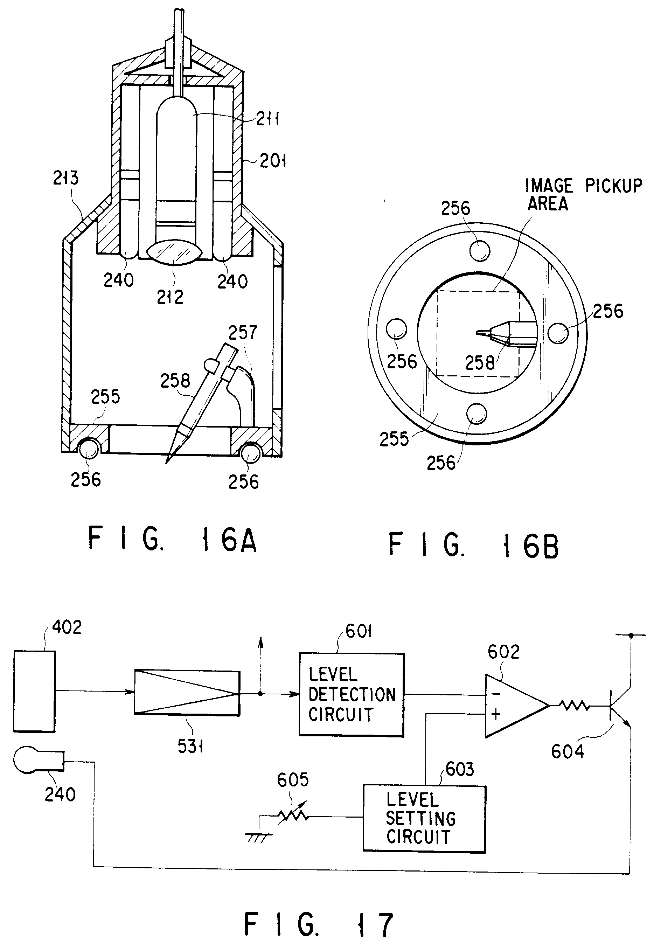

Fig. 16 shows another embodiment of the invention wherein the video camera 200 is associated with writing means. This embodiment is effective when writing must be made in a small area. The parts common to those in the preceding embodiments are denoted by like reference numerals, only different parts are described. In this embodiment, a fixed ring 255 is attached by screws (not shown) to the inner periphery of the lower end portion of the hood 213. Balls 256 are provided at some locations on the lower surface of the fixed ring 255, thereby making the movement of the video camera 200 easier. Further, a writing means holder 257 is provided on the upper surface of the fixed ring 255. When writing means 258 is attached to the holder 257, a tip portion of the writing means 258 is located at the center of the image pickup area.

By using the video camera 200, the user can write characters, etc. while viewing the magnified display on the display device. In this case, the video camera 200 needs to be freely movable in all directions. Thus, the balls 256 are rotatably attached on the lower surface of the fixed ring 255.

Fig. 17 illustrates the relationship between the video camera 200 and the illumination means thereof.

When the magnifying reading apparatus is used, there may be a case where a dark area and a light area are mixed, depending on the situation for use. In such a case, unless the intensity of illumination is stabilized, the user has difficulty in reading.

According to this system, the light emission amount of the light-emitting element is automatically adjusted in accordance with the ambient darkness. Thus, stable images can be obtained without using illumination equipment. The means for this comprises a solid pickup element, level detection means for detecting the level of an image signal obtained from the solid pickup element, comparing means for comparing the detected level and a reference level and obtaining a difference output, and a light-emission element, situated on the side of the solid pickup element, for emitting light to the image pickup area. The intensity of emitted light is controlled by the difference output from the comparing means.

By the above means, an object to be scanned is always illuminated with light of a preset level. Thus, the monitor can display a clear image.

Referring to Fig. 17, an image signal obtained from the solid pickup element 402 is amplified by the amplifier 531. The amplified signal is supplied to the signal processing circuit (shown in Figs. 10 and 11) for performing signal processing for displaying images on the monitor. The output from the amplifier 531 is also supplied to a level detection circuit 601 for detecting the level of the image signal. The detected level is supplied to one input terminal of a comparator 602. A reference level produced by a level setting circuit 603 is supplied to the other input terminal of the comparator 602. The comparator 602 can produce a difference output corresponding to the difference between the input detected level and the reference level. The difference output from the comparator 602 is used as a control signal for a current control transistor 604. When an average level is lower than the reference level, the control current increases to cause more current to flow through the transistor 604. The output current of the transistor 604 is supplied to the light-emitting element functioning as illumination device 240, and it controls the intensity of light emitted by the light-emitting element. Thus, the light-emitting element (illumination device 240) can emit light of the reference level. The reference level can be varied by adjusting an adjuster 605.

In Fig. 17, one illumination device 240 is representatively shown, but a plurality of light-emitting elements are actually arranged near the edge of the solid pickup element 402, thereby uniformly illuminate the object.

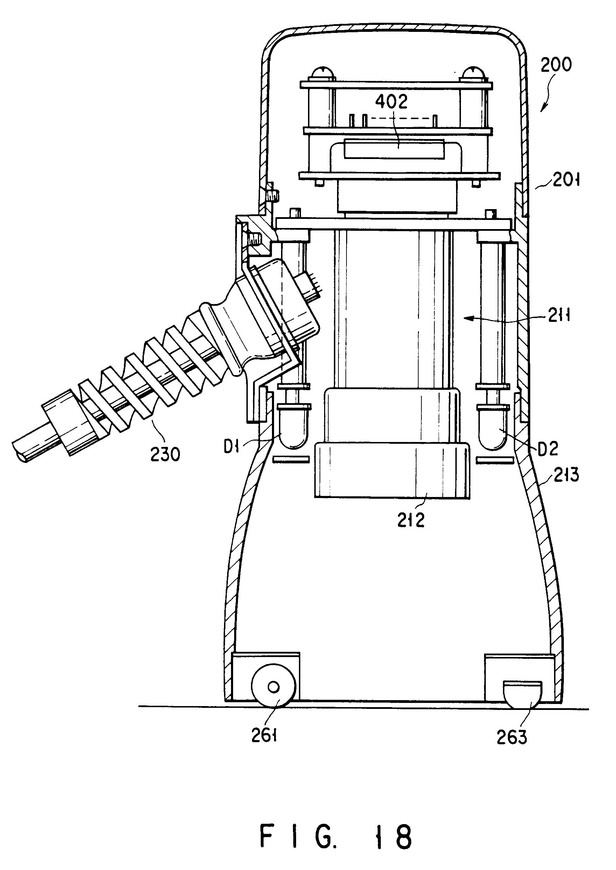

Fig. 18 shows an example of the structure of the video camera including the circuit shown in Fig. 17. Numeral 201 denotes a cylindrical case with a bottom. The camera case 201 has such a size that it can be held by one hand. Within the camera case 201, a lens system 212 is arranged on the opening side and a solid pickup element 402 is arranged on the bottom side. An optical image coming from the lens system 212 is focused on a focusing face of the solid pickup element 402. An image signal output from the solid pickup element 402 is supplied to a control unit via a signal line of a cord 230 attached to a side portion of the camera case 201. A plurality of illumination devices constituted by light-emitting elements D1, D2... are arranged near the tip portion of the lens system 212. The illumination devices are driven by the circuit shown in Fig. 17. The opening portion of the camera case 201 is provided with a hood 213. The hood may be replaced with leg-shaped spacers. A roller 261 is rotatably attached at the tip of the hood 213 for smooth movement on the book. When the camera body is moved, the direction of the movement is determined by the roller 261, and lateral shaking is prevented. A sliding member 263 including a roller is provided at a location opposed to the roller 261.

According to the above image input means, the surface of the object to be scanned is kept at a reference-level brightness. Thus, there is no need to provide an external illumination adjusting means, and the handling of the camera is very easy.

In the above description of the embodiment, the characteristic of the light-emitting device has not been mentioned. However, various colors of light, e.g. white, red, blue, and green, may be chosen, and illumination color may be switched. The solid pickup element 402 may be a monochromatic or color device. There are persons who are not sensitive to red or who are excessively sensitive to red. In this case, the emission light color may be switched to one which is clearly recognized on the monitor by the user.

As has been described above, according to the present apparatus system, the size of the illumination device is small and the illumination intensity is automatically adjusted.

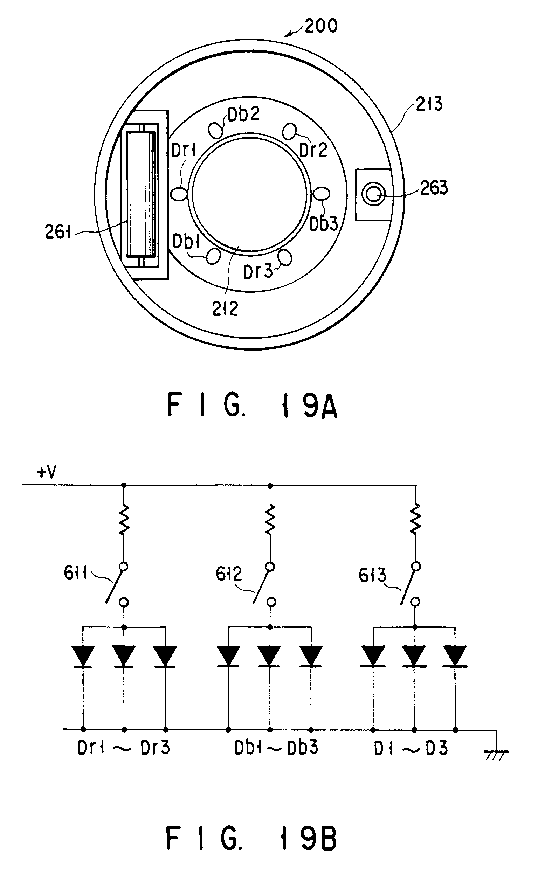

Fig. 19A shows still another embodiment of the video camera 200. The structure of the camera shown in Fig. 19A is identical to that of the camera shown in Fig. 18, and the detailed description thereof is omitted. In this video camera 200, various kinds of emission colors can be switched. Fig. 19A is a lowerside view of the video camera. In this embodiment, for example, two colors can be selected. Red-light emission elements Dr1, Dr2 and Dr3 are equidistantly arranged around the camera using a solid pickup element, and also blue-light emission elements Db1, Db2 and Db3 are equidistantly arranged. Though not shown, colorless light emission elements D1, D2 and D3 are also arranged equidistantly.

Fig. 19B shows a switching circuit for the light emission elements. Switches 611, 612 and 613 are arranged in parallel to a power supply line. The light emission elements Dr1 to Dr3 are connected in parallel between an output terminal of the switch 611 and a ground line. The light emission elements Db1 to Db3 are connected in parallel between an output terminal of the switch 612 and the ground line. Further, the light emission elements D1 to D3 are connected in parallel between an output terminal of the switch 613 and the ground line. The switches 611, 612 and 613 are exposed on the outer periphery of the camera case 201 and can be operated by the hand.

By switching the emission light color, the color of the object is made different from the color of illumination light, thereby obtaining clear display images. In the above embodiment, the illumination light color can be switched, but it is possible to use changeable film filters with transparent illumination light being employed.

## Claims

1. A portable magnifying reading apparatus characterized by comprising:
a case (100) having an openable cover;
a video camera (200) removably contained in the case and having a zoom function;
a liquid crystal display (LCD) device (300) contained in the case (100);
a first connection terminal (121), provided on a wall of the case (100), for receiving a video signal from the video camera (200);
a second connection terminal (107), provided on a wall of the case (100), for receiving an external video signal; and
operation means (105), provided in an operation unit of the case (100), for selecting one of the video signal from the video camera via the first connection terminal and the external video signal via the second connection terminal (107), and supplying the selected signal to the LCD device (300).

2. The apparatus according to claim 1, characterized in that the case (100) has a battery container portion (106).

3. The apparatus according to claim 1, characterized in that said LCD device (300) comprises:
a rectangular display panel portion (301);
a panel holding portion for holding the display panel portion (302); and
holding means (303, 304, 305), provided between the display panel portion and the panel holding portion, for enabling the panel holding portion to hold the display panel portion in one of a horizontal attitude and a vertical attitude.

4. The apparatus according to claim 1, characterized in that the case (100) is provided with connection terminals (121, 122, 123, 124) for connection with a cord of the video camera at a plurality of locations, thereby increasing an area of movement of the video camera (200).

5. The apparatus according to claim 1, characterized in that the case (100) has a container portion (112) for containing the LCD device (300), and
the LCD device (300) is removable from the container portion (112), thereby increasing an area of movement of the LCD device.

6. A portable magnifying reading apparatus characterized by comprising:
a video camera (200) having a zoom function;
a signal processing unit (501) for converting an output from the video camera to a display video signal;
an external output terminal (504) through which an output from the signal processing unit is delivered to the outside;
an external input terminal (511, 512) for receiving an external video signal;
selective reception means (506) for selectively receiving one of an external input video signal from the external input terminal and an output video signal from the signal processing unit; and
supply means (507, 509) for supplying the video signal from the selective reception means to a liquid crystal display (LCD) device (300).

7. The apparatus according to claim 6, characterized in that the video camera (200) obtains a monochromatic video signal,
the supply means (507, 509) includes a circuit for adding a coloring signal for coloring a character portion and a picture portion of the video signal, and
the LCD device (300) is a color liquid crystal display device.

8. The apparatus according to claim 6, characterized by further comprising:
a power supply circuit (522) for smoothing a commercial AC power supply voltage to obtain a first power supply voltage;
a second power supply voltage supplied from a battery (526); and
a switch (523) for selecting one of the first power supply voltage and the second power supply voltage and supplying the selected voltage to internal circuits.

9. The apparatus according to claim 6, characterized in that the signal processing unit (501) comprises:
binary-coding means (531, 532, 535) for comparing an image signal obtained from a solid pickup element (402) with a predetermined reference level, and outputting a binary-coded image signal; and
an encoder (536) for encoding the binary-coded image signal obtained by the binary-coding means and producing an encoded video signal.

10. The apparatus according to claim 6, characterized in that the signal processing unit (501) comprises:
storing means (541) for storing an image signal corresponding to one field of a solid pickup element (402);
read-out means (543) for repetitively reading out the image signal stored in the storing means; and
storing cycle changing means (544) for controlling the read-out means (543) and changing the data storing cycle of the storing means in response to a remote operation.

11. The apparatus according to claim 10, characterized by further comprising switch means (545) for alternately selecting an output signal from the storing means (541) and a signal from the solid pickup element (402) and supplying the selected signals to an encoder.

12. The apparatus according to claim 6, characterized by comprising:
a first AC/DC converter, provided within the case, for receiving a commercial AC power supply voltage from a first plug and outputting a DC voltage;
a second AC/DC converter, provided outside the case, for receiving a commercial AC power supply voltage from a second plug and outputting a DC voltage;
an external connector (136) of the second AC/DC converter;
a fixed connector (137) provided on the case;
a first switch (133) for selecting one of an output from the fixed connector and an output from the first AC/DC converter, and selecting the output from the fixed connector when the external connector is connected to the fixed connector;
a power source selector (138) for receiving an output from the first switch;
a battery (140) provided in a container portion in the case; and
a second switch (139), controlled by an output from the power source selector, for selecting an output from the first switch and supplying the output from the first switch to the internal circuits of the case when the power source selector detects that the output level of the first switch is high, and for selecting an output from the battery and supplying the output from the battery to the internal circuits of the case when the power source selector detects that the output level of the first switch is zero.

13. The apparatus according to claim 1, characterized in that the video camera (200) comprises:
a cylindrical camera case (201) having one end opened and the other end bottomed;
an image pickup camera (211) situated on the bottom side of the camera case and having an image pickup face directed to the open end side;
a magnifying lens situated at a forward point in an optical path of the image pickup camera (211); and
a columnar roller (223), provided rotatably at an opening edge of the camera case (201) such that the rotational axis of the roller is perpendicular to the direction of movement of the camera case, thereby making easier movement of the camera case when the camera case is moved with the opening end opposed to the surface of an object to be scanned.

14. The apparatus according to claim 1, characterized in that the video camera (200) comprises:
a cylindrical camera case (201) having one end opened and the other end bottomed;
an image pickup camera (211) situated on the bottom side of the camera case and having an image pickup face directed to the open end side;
a magnifying lens (212) situated at a forward point in an optical path of the image pickup camera (211);
a fixed ring (251) fixed on the opening-side inner periphery of the camera case (201);
a rotatable ring (253) coaxially situated below the fixed ring 251 such that the rotatable ring is rotatable but immovable in the axial direction;
click means (25a to 25d, 26, 27), provided between the fixed ring (251) and the rotatable ring (253), for holding the rotational position of the rotatable ring (253); and
a rotatable columnar roller (261, 262), provided on the lower surface of the rotatable ring (253), for smoothly moving the video camera (200).

15. The apparatus according to claim 1, characterized in that the video camera (200) comprises:
a cylindrical camera case (201) having one end opened and the other end bottomed;
an image pickup camera (211) situated on the bottom side of the camera case and having an image pickup face directed to the open end side;
a magnifying lens (212) situated at a forward point in an optical path of the image pickup camera (211); and
an opening portion (214), formed on a side portion of the camera case (201), for easy insertion of writing means.

16. The apparatus according to claim 1, characterized in that the video camera (200) comprises:
a cylindrical camera case (201) having one end opened and the other end bottomed;
an image pickup camera (211) situated on the bottom side of the camera case and having an image pickup face directed to the open end side;
a magnifying lens (212) situated at a forward point in an optical path of the image pickup camera (211);
a fixed ring (255) fixed on the opening-side inner periphery of the camera case (201);
a plurality of rotatable balls (256), provided at a plurality of locations on the lower surface of the fixed ring (255), for moving the video camera (200) in all directions; and
writing member holding means (257) attached on the fixed ring (255).

17. The apparatus according to claim 1, characterized in that the video camera (200) comprises:
a cylindrical camera case (201) having one end opened and the other end bottomed;
an image pickup camera (211) situated on the bottom side of the camera case and having an image pickup face directed to the open end side;
a magnifying lens (212) situated at a forward point in an optical path of the image pickup camera (211);
a plurality of light-emitting illumination elements (240) provided around the magnifying lens (212);
a level detection means (601) for detecting the level of an image signal obtained by the image pickup camera (211);
comparing means (602) for comparing the detected level output from the level detection means (601) with a reference level and outputting a difference output; and
luminance control means (604) for controlling the luminance of the light-emitting illumination elements on the basis of the difference output.

18. The apparatus according to claim 1, characterized in that the video camera (200) comprises:
a cylindrical camera case (201) having one end opened and the other end bottomed;
an image pickup camera (211) situated on the bottom side of the camera case and having an image pickup face directed to the open end side;
a magnifying lens (212) situated at a forward point in an optical path of the image pickup camera (211);
a plurality of light-emitting element groups (Dr1 to Dr3; Db1 to Db3; D1 to D3) provided around the magnifying lens, the illumination light colors of said light-emitting element groups being different from group to group; and
switch means (611 to 613) for selecting and turning on one of the light-emitting element groups (Dr1 to Dr3; Db1 to Db3; D1 to D3).
